# EUROPEAN PATENT APPLICATION

(11) **EP 3 302 000 A1**
(43) Date of publication of application: **04.04.2018**
(21) Application number: 17194099.2
(22) Date of filing: 29.09.2017
(51) Int. Cl.: H05B 3/00, C08F 2/48

(54) **AN ENHANCED LED POLYMERIZATION DEVICE**

(30) Priority: 03.10.2016 IT 201600098935
(71) Applicant: Elmag S.P.A., 20900 Monza (MB) (IT)
(72) Inventor: VALTORTA, Gloria, 22040 Lurago d'erba (CO) (IT); FINETTI, Roberto, 20099 Sesto San Giovanni (MI) (IT)
(74) Representative: Ripamonti, Enrico

(57) **Abstract**

An enhanced LED (Light Emitting Diode) UV (Ultra Violet) polymerization device (10) suitable for being used for polymerizing resins, glues or inks applied on flat surfaces of panels, sheets, or coils made from wood or other materials, such as glass, plastic, metal, composite materials, paper, and cardboard, and on shaped surfaces of non-flat pieces made from wood or other materials, comprising a plurality of LEDs (16) of the UV type and wherein said LEDs (16) are organized into arrays or strings (17, 17') arranged perpendicularly to or inclined with respect to the feeding direction of the piece to be submitted to polymerization, said arrays (17, 17') of LEDs (16) being angularly orientable with respect to a horizontal plane either synchronously or independently to modify the radiation parameters of said LEDs (16), power level, distance from the panel or piece to be submitted to polymerization, and passage speed of the pieces being processed being equal.

## Description

The present invention refers to an enhanced LED (Light Emitting Diode) UV (Ultra Violet) polymerization device.

More specifically, the present invention refers to an enhanced LED UV polymerization device suitable for being used in the painting sector for painting wood and other materials, such as for instance glass, plastic, metal, composite materials, paper, and cardboard, and more particularly for polymerizing paints, resins, glues, or inks used to coat flat or shaped surfaces of panels, sheets, or coils (i.e. in applications typically referred to as roll-to-roll applications) or shaped pieces made from wood or other materials, such as for instance glass, plastic, metal, composite materials, paper, and cardboard.

It is known that the UV paint polymerization (photo-polymerization) is a process used to harden photosensitive paints.

Such photo-polymerization is traditionally obtained through an irradiation from bulb ultraviolet lamps featuring given power densities (typically with values of 120 W/cm, 160 W/cm, or 200 W/cm) and a characteristic multi-chromatic emission spectrum depending on the type of lamp selected (for instance a mercury, gallium, iron lamp, etc.).

Another type of UV apparatus, typically used for polymerizing paints, makes use of LED UV systems characterized in having an emission on a monochromatic wavelength and present advantages related to the fact of being capable of guaranteeing an operating temperature lower than the remaining known systems and, consequently, the use of LEDs is found to be more suitable for processing heat-sensitive materials.

A LED polymerization apparatus also makes it possible to offer reduced power consumptions, an efficiency extended and guaranteed over time, and lower operating temperatures, does not lead to the formation of harmful gases, and allows for high savings in the production cycles in terms of both space and energy.

A LED polymerization apparatus implies an operating distance (i.e. the distance between the light source and the piece to be processed) typically ranging from 5 to 50 mm and lower than the operating distances of the traditional lamps, which range from 150 to 300 mm.

It is known that the characteristic parameters to be taken into account to evaluate the efficiency of an UV polymerization system consist of the "peak", i.e. the power density (measured in mW/cm²), and of the energy density (measured in mj/cm²) which, being the integral of the theoretical emission curve, is strictly bound to the exposure time and, consequently, to the production speed. These two parameters, if used correctly, characterize the possibility of polymerizing the different types of paint and/or ink presently available on the market more effectively. However, the polymerization systems feature a number of major drawbacks bound to the fact that, in certain cases, it is necessary to vary the polymerization parameters, namely: power density (watts/cm²), energy density (mj/cm²), and exposure time.

At present, the traditional LED UV devices shall, in such cases: increase the nominal power supply level, vary the passage speed of the piece and vary the distance of the LED apparatus from the product to be processed, which is obtained by making the piece get closer to or move away from the LED light source.

However, these operating modes entail a number of major drawbacks bound to the fact that an increased power level, in terms of a changed density of the LEDs or of an increased unit power level of the LEDs, entails a difficult control of the operating temperatures of the LED apparatus with its respective and related control and reliability problems, as well as increased overall costs.

This difficult control of the operating temperatures also results in increasing the temperature in the junction points of the LEDs to the printed circuit board with a related reduction in the emission efficiency of the LEDs themselves.

A further drawback is bound to the fact that an excessive reduction of the distance between the piece to be submitted to polymerization and the LED device entails reliability problems, account being taken of the fact that in the presence of a piece with irregular surfaces there is a risk that said piece might crash against the polymerization device.

A further drawback is bound to the fact that the pieces to be submitted to polymerization might have different thicknesses, which entails the need for moving the LED device in height so as to adjust it as a function of the type of piece.

A further drawback consists in that the traditional LED devices do not allow for an optimum polymerization of paints on surfaces featuring irregular shapes, because the beams emitted by the light source of the LED device hit the flat surfaces more efficiently, considering that efficiency is proportional to cosine of the angle of incidence of the light emitted by the LEDs on the piece.

An object of the present invention is to obviate the drawbacks listed above.

More specifically, an object of the present invention is to provide an enhanced LED polymerization device to be used for polymerizing paints, inks, and glues that allows for an adjustment of the following parameters: peak (measured in mw/cm²), energy density (measured in mj/cm²), and exposure time, without modifying the installed power, without modifying the operating distance with respect to the piece, and without modifying the passage speed.

A further object of the present invention is to allow for an optimum exploitation of the angle of incidence of the light beams on the surface to be processed, even in the case of surfaces that are irregular or not parallel to the plane on which the pieces to be processed are fed.

A further object of the present invention consists in that, the polymerization performances being equal, the lower density of the LEDs and their lower operating temperature put at user's disposal an enhanced LED polymerization device suitable for providing high strength and reliability over time and also such that it is possible to implement it in an easy and cost-effective manner.

These objects and others are achieved by the invention that features the characteristics according to claim 1.

In accordance with the invention, an enhanced LED (Light Emitting Diode) UV polymerization device is provided suitable for being used for polymerizing paints, inks, and glues applied on shaped panels and pieces, comprising a plurality of UV (Ultra Violet) LEDs, said LEDs being organized into arrays or strings arranged perpendicularly or inclined with respect to the feeding direction of the piece to be submitted to polymerization, said LED arrays being angularly orientable either synchronously or independently, so as to allow for an adjustment of the polymerization parameters, i.e. peak, energy density, and exposure time, the power level, feed speed, and distance from the panel or piece to be submitted to polymerization being equal.

Advantageous embodiments of the invention are apparent from the dependent claims.

The constructional and functional characteristics of the enhanced LED polymerization device according to the present invention can be better understood from the following detailed description, wherein reference is made to the attached drawings which represent a preferred, non-limitative embodiment thereof, and wherein:

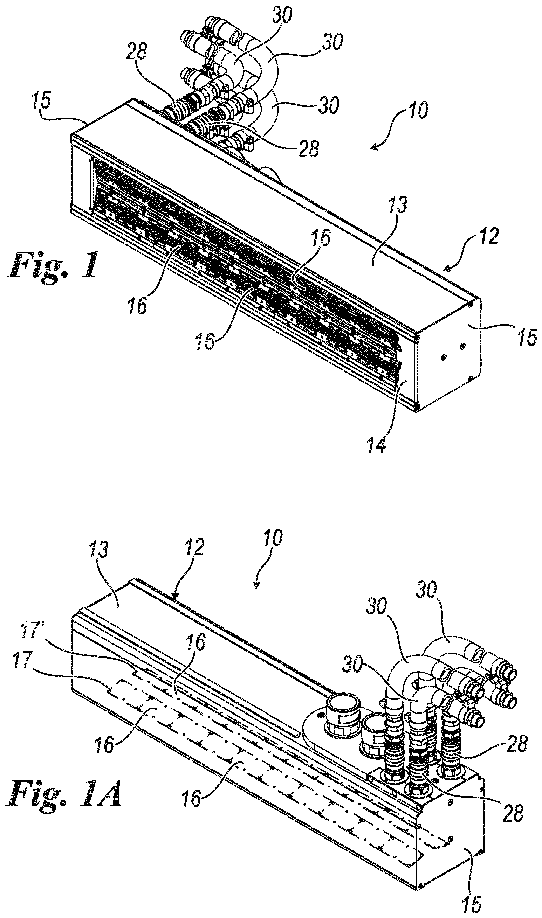

figure 1 schematically shows an axonometric view of an enhanced LED polymerization device according to the present invention;
figure 1A schematically shows a further axonometric view of the device according to the invention wherein a number of component parts of the device are shown in broken lines;
figure 2 schematically shows a cross-sectional view according to a plane transversal to a direction of longitudinal development of the polymerization device according to the invention;
figures 3 thru 6 and 3A thru 6A schematically show the diagrams of the curve showing how the energy emitted by the system varies as a function of exposure time (figures 3 thru 6) and the installation configuration of the device according to the invention that makes it possible to get such curve (figures 3A thru 6A), respectively.

With reference to the mentioned figures, the enhanced LED UV polymerization device according to the present invention, identified by the reference numeral 10 as a whole, comprises a box-like body or housing 12 internally to which there are accommodated the elements and component parts of the polymerization device, a detailed description of which will follow.

The housing 12 features a longitudinal development and preferably, but not exclusively, features a parallelepiped-like shape and is open in correspondence with a lower front 14 facing the piece to be submitted to a polymerization process, as detailed here below.

Said housing 12 consists of a section bar 13 made from aluminum, its alloys, or another material suitable for this purpose and is closed at the opposed ends by way of panels 15 secured to the section bar by way of screws, pins, or other suitable retention means.

Internally to the housing 12 and in correspondence with the lower front 14 there is arranged a plurality of UV (Ultra Violet) LEDs 16 organized into several arrays or strings 17 and 17', typically two adjacent parallel arrays, arranged according to the direction of longitudinal development of the housing 12 and secured thereto by way of a support structure 18 consisting of plates 18' which said arrays are secured to.

A layer made from an insulating material 19 is arranged in an intermediate position between the plate 18' and the support 18.

The number of LEDs 16 that make up every array 17 and 17' is selected as a function of the characteristics of said LEDs and of the specific polymerization process requirements.

Terminals 22, suitable for allowing for the electrical connection between the arrays 17 and 17' and the electric power network, are also arranged internally to the housing 12, are mechanically stabilized thereto by way of a further support structure 24, and are connected to the electric power network; in the embodiment shown in the figures, said further support structure 24 is secured to the support structure 18 by way of screws 25 or equivalent known retention elements.

Considering that the LED light sources develop, during their operation, a substantial quantity of heat, which entails a consequent increase of temperature in the device with its respective risks for malfunctions, breakages, or the like, heat dissipation devices shall be used to lower the temperature.

In the specific case of the embodiment according to the figures, the device is cooled down by making the plates 18' in the support structure 18 cool down by using water and, for this purpose, internally to the housing 12 there are arranged a number of ducts 26 which make it possible for the cooling water to flow through said housing 12 by way of fitting elements 28 and pipes 30 arranged externally to the housing 12 and connected to the cooling water feeding source.

According to an alternative embodiment, the device can be cooled down by using air or in another known manner can serve for this purpose, and is proportionate to the temperature values reached.

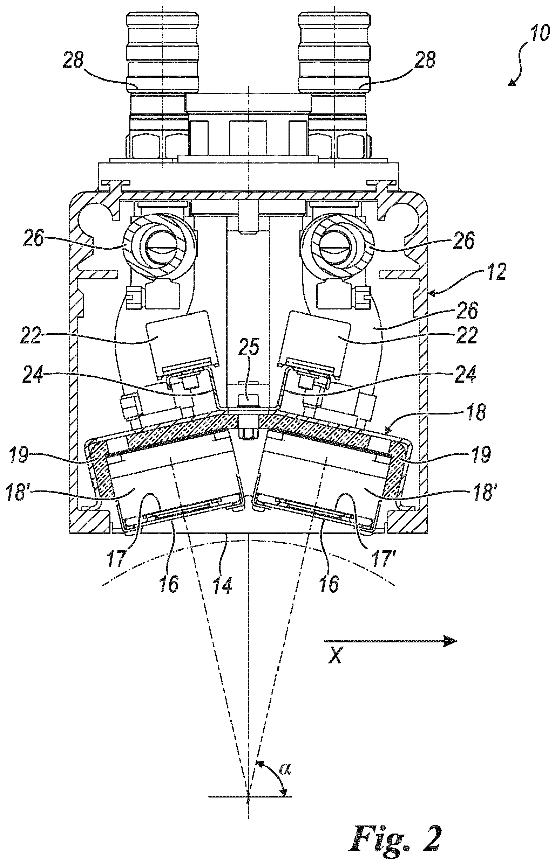

The arrays 17 and 17' of LEDs 16, thus secured to the plates 18' in the support structure 18, can be oriented in such a way as to create a configuration wherein they are arranged according to a horizontal plane or according to planes inclined with respect to a horizontal plane, this in order to adjust the angle of incidence of the light beam emitted by said LEDs 16 with respect to the piece or support to be submitted to a polymerization process; the angle of incidence of the light beam emitted by each individual array 17 and 17' of said LEDs with respect to the plane of the support to be processed is referred to as "α" in figure 2 and ranges from 90° to 45°.

It is understood that in the device according the invention the inclination of the arrays 17 and 17' of LEDs 16 with respect to a horizontal plane is not fixed, but rather it can be adjusted as a function of the specific requirements and, also, the individual arrays can be adjusted independently of each other or synchronously and symmetrically.

In the embodiment according to the figures, the LEDs 16 organized into arrays 17 and 17' are shown arranged according to a plane inclined with respect to a horizontal plane and, specifically, said arrays 17 and 17' are arranged according to inclined planes that are different and symmetrical.

The inclination of the arrays 17 and 17' of LEDs 16 can be adjusted either manually, by using local controls (hand levers or the like) placed on the polymerization device or by using manual, but remotized, controls, or fully automatically by using automatically operated mechanical means (for instance, hand levers or wheelworks operated by a pneumatic or electrical actuator).

For explanatory purposes only, the two arrays 17 and 17' of LEDs 16 and, more specifically, the plates 18' which said arrays or strings are secured to can be rotatably connected to each other along a common longitudinal side to form a hinge bond for a common or synchronous movement of the arrays by means of actuation means consisting, for instance, of a worm transmission manually operated by way of a handwheel or in another known manner; the same worm transmission might be operated automatically by way of an electric motor.

According to an alternative embodiment, the arrays or strings 17 and 17' of LEDs 16 can be connected to each other along a common longitudinal side to form a hinge bond and be angularly oriented independently of each other by means of dedicated moving means for each individual plate 18' which the array or string of LEDs is secured to.

According to a further embodiment, the plates 18' which the arrays or strings 17 and 17' of LEDs 16 are secured to are not connected to each other, i.e. they are individually rotatably bound to the housing 12 or in another point internal to said housing.

The arrays 17 and 17' of LEDs 16 might also be switched on and power adjusted individually, and their switch-on might be chocked in width, for an optimum adjustment of the emitted beam as a function of the specific requirements.

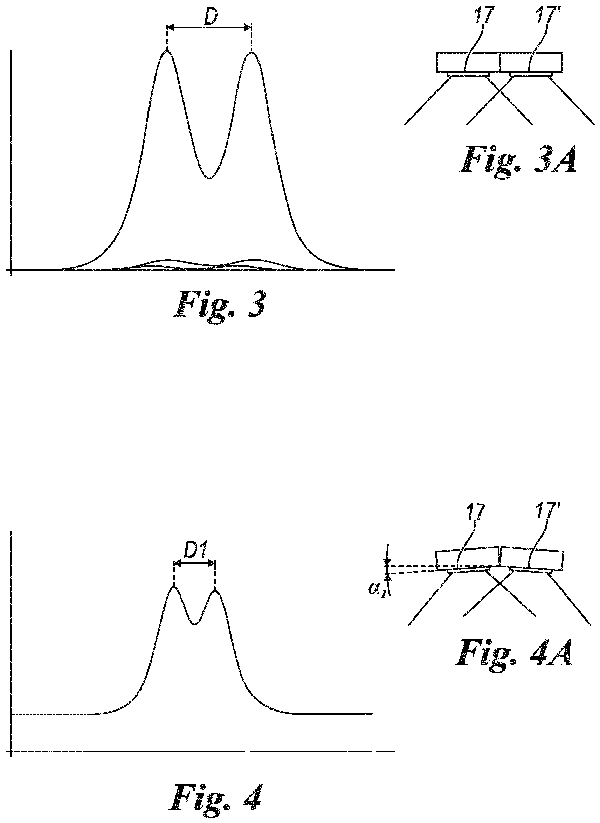

With reference to figures 3 thru 6 and 3A thru 6A, they show different inclination configuration for the arrays 17 and 17' of LEDs 16 as a function of different angles of incidence of the light beam emitted by said LEDs to be obtained with respect to the plane of the support to be submitted to a polymerization process.

Figure 3A shows a first exemplary configuration wherein the two arrays 17 and 17' are arranged according to a horizontal plane and figure 3 is a diagram that shows how the energy emitted by the system varies as a function of exposure time; the figure clearly shows that the curve is formed of the superposition of the curves of the individual arrays and features two peaks one beside the other due to the fact that the two arrays determine a double radiation window (each individual peak is in correspondence with each individual array of LEDs).

In such configuration, the two peaks one beside the other are definitely separated from each other by an intermediate valley (the letter "D" indicates the distance between said peaks) and the area subtended by the curve (the combination of the individual curves of the individual arrays) represents the energy emitted by the system as a function of exposure time.

Figure 4A shows a second exemplary configuration wherein the two arrays 17 and 17' are arranged symmetrically according to a plane inclined with respect to the horizontal plane by an angle α1, and figure 4 shows the emitted energy curve, wherein two peaks are visible, separated from each other at a distance indicated by "D1". The distance D1 between the peaks of the emitted energy curve is shorter than the distance D according to figure 3; therefore, the overall exposure time is shorter and the peak is increased, generally and specifically, in the central zone of the curve according to figure 4.

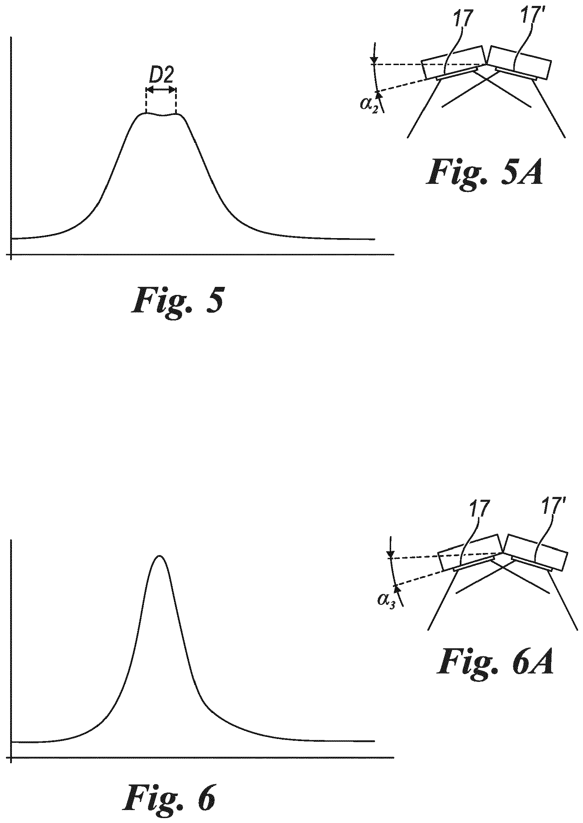

Figure 5A shows a third exemplary configuration wherein the two arrays 17 and 17' are arranged symmetrically according to a plane inclined with respect to the horizontal plane by an angle α2 (where α2 > α1), and figure 5 shows the emitted energy curve wherein two peaks are visible separated from each other by a distance indicated by "D2".

The distance D2 between the peaks of the emitted energy curve is shorter than the distance D1 according to figure 4; therefore, the overall exposure time is further reduced and the peak is further increased, generally and specifically, in the central zone of the curve according to figure 5.

Figure 6A illustrates a fourth exemplary configuration wherein the two arrays 17 and 17' are arranged symmetrically according to a plane inclined with respect to the horizontal plane by an angle α3 (where α3 > α2), and figure 6 shows the emitted energy curve wherein, the overall exposure time being further reduced, the two power peaks relevant to the individual arrays are fully superimposed to each other to form one peak and, consequently, a central zone wherein the energy is the maximum one and the one peak is higher than the two separated peaks.

In all of the four exemplary configurations, the emitted energy remains almost the same.

Adjusting the reciprocal inclination of the two arrays 17 and 17' of LEDs 16 with respect to a horizontal plane makes it possible to adjust the angle of incidence of the light beam emitted by the LEDs of the two arrays with respect to the plane of the support to be submitted to a polymerization process in a range of values substantially comprised from 90° to 45° and, in this way, it is possible to increase the radiation peak (that is formed of the two arrays of LEDs) up to exceeding the original peak values without any increase in power density, the radiation distance between the device and the piece/product to be submitted to a polymerization process being equal.

The advantages offered by the device according to the invention are apparent from the foregoing.

The enhanced LED polymerization device according to the present invention advantageously makes it possible to adjust the radiation parameters, such as power density (or peak power) power and exposure time, the total energy value remaining almost unchanged, without any need for increasing the installed power or decreasing the operating distance with respect to the piece processed.

A further advantage of the device according to the invention consists in that, thanks to the possibility of adjusting the reciprocal inclination of the arrays of LEDs with respect to a horizontal plane, it allows to optimally adjust the angle of incidence of the light beam emitted by the LEDs of the individual arrays with respect to the different surfaces to be processed, even in the case that they are irregular or feature surfaces non parallel to the plane in which the pieces are fed in the oven.

A further advantage according to the invention consists in that the arrays of LEDs can be oriented synchronously or independently of each other, thus allowing to optimize polymerization even on types of substrates that are different in terms of shapes and/or thickness and dimensions.

Even though the invention has been described above with a special reference to an embodiment thereof which has been given only for explanatory, non-limitative purposes, numerous modifications and variants will be apparent to those skilled in the art in the light of the previous description. Therefore, the present invention is to be construed to embrace all modifications and variants that fall in the scope of the following claims.

## Claims

1. An enhanced LED (Light Emitting Diode) UV (Ultra Violet) polymerization device (10) suitable for being used for polymerizing resins, glues, or inks applied on flat surfaces of panels, sheets, or coils made from wood or other materials, such as glass, plastic, metal, composite materials, paper, and cardboard, and on shaped surfaces of non-flat pieces made from wood or other materials, comprising a plurality of LEDs (16) of the UV type and **characterized in that** said LEDs (16) are organized into arrays or strings (17, 17') arranged perpendicularly to or inclined with respect to the feeding direction of the piece to be submitted to polymerization and secured to a support structure (18) internally stabilized to a housing (12) and comprising plates (18') which the arrays or strings (17, 17') are secured to, the plates (18') of the support structure (18) comprising means for a synchronous or independent adjustment of the reciprocal inclination between said arrays or strings with respect to a horizontal plane to obtain an adjustment between a configuration wherein said arrays or strings lay on a horizontal plane and one or several configurations wherein said arrays or strings are arranged according to planes inclined with respect to a horizontal plane, to form an angle of incidence of the light emitted by the LEDs (16) of each individual array or string (17 and 17') in the range from 90° to 45° with respect to the plane of the panel or piece to be submitted to polymerization for an adjustment of the radiation parameters of said LEDs (16), power level, distance from the panel or piece to be submitted to polymerization, and passage speed of the pieces being processed being equal.

2. The device according to claim 1, **characterized in that** the plates (18') of the support structure (18) which the arrays or strings (17, 17') of LEDs (16) are secured to are rotatably connected to each other along a common longitudinal side to form a hinge bond for a movement whereby the orientation of the reciprocal inclination between said arrays or strings is synchronous or for an independent adjustment of the arrays or strings with respect to each other.

3. The device according to claim 1, **characterized in that** the plates (18') in the support structure (18) which the arrays or strings (17, 17') of LEDs (16) are secured to, are individually and rotatably bound to the housing (12) or to another point internal to the housing (12).

4. The device according to any of the previous claims, **characterized in that** it comprises mechanical means for actuating the orientation of the arrays or strings (17, 17') of LEDs (16), said means being locally or remotely, manually operated.

5. The device according to any of the previous claims, **characterized in that** it comprises mechanical means for actuating the orientation of the automatically operated arrays or strings (17, 17') of LEDs (16).

6. A use of the device according to any of the previous claims, for an optimum exploitation of the angle of incidence of the light beams on the surfaces to be processed, said surfaces being even irregular or non-parallel to the feeding plane of said pieces to be processed.
